# EUROPÄISCHE PATENTANMELDUNG

(11) **EP 3 182 136 A1**
(43) Veröffentlichungstag der Anmeldung: **21.06.2017**
(21) Anmeldenummer: 16200423.8
(22) Anmeldetag: 24.11.2016
(51) Int. Cl.: G01N 35/10, B01L 3/00, B65D 75/58

(54) **FOLIENBEUTEL FÜR EIN MIKROFLUIDISCHES ANALYSESYSTEM, MIKROFLUIDISCHES ANALYSESYSTEM, VERFAHREN ZUM HERSTELLEN UND VERFAHREN ZUM BETREIBEN EINES MIKROFLUIDISCHEN ANALYSESYSTEMS**

(30) Priorität: 18.12.2015 DE 102015225837
(71) Anmelder: ROBERT BOSCH GMBH, 70442 Stuttgart (DE)
(72) Erfinder: Brettschneider, Thomas, 71229 Leonberg (DE); Rupp, Jochen, 70569 Stuttgart (DE); Czurratis, Daniel, 70825 Korntal-Muenchingen (DE); Dorrer, Christian, 71364 Winnenden (DE); Seidl, Karsten, 70839 Gerlingen (DE)

(57) **Zusammenfassung**

Die Erfindung betrifft einen Folienbeutel (100) für ein mikrofluidisches Analysesystem. Der Folienbeutel (100) weist einen Folienbeutelboden (120), eine gegenüberliegend zum Folienbeutelboden (120) angeordnete Folienbeutelöffnung (125) und eine zwischen dem Folienbeutelboden (120) und der Folienbeutelöffnung (125) angeordnete Peelnaht (105) auf, die dazu ausgeformt ist, um einen geschlossenen Reagenzienaufnahmebereich (110) zwischen der Peelnaht (105) und dem Folienbeutelboden (120) und einen Schlauch (115) zwischen der Peelnaht (105) und der Folienbeutelöffnung (125) zu erzeugen, wobei der Reagenzienaufnahmebereich (110) eine sich zwischen der Peelnaht (105) und dem Folienbeutelboden (120) erstreckende Reagenzienaufnahmelänge aufweist und der Schlauch (115) eine sich zwischen der Peelnaht (105) und der Folienbeutelöffnung (125) erstreckende Schlauchlänge aufweist, die zumindest fünf Prozent der Reagenzienaufnahmelänge beträgt.

## Beschreibung

### Stand der Technik

Die Erfindung geht aus von einer Vorrichtung oder einem Verfahren nach Gattung der unabhängigen Ansprüche.

In Analysesystemen, die z. B. für die medizinische Diagnostik, Umweltanalytik oder Prozesskontrolle verwendet werden, besteht oftmals die Notwendigkeit zur Vorlagerung von Fluiden wie flüssigen Reagenzien. Diese können z. B. wässrige Lösungen, Puffer oder alkoholhaltige Lösungen sein. Die Analysesysteme können z. B. Lab-on-Chip-(LOC-)Systeme sein, d. h. mikrofluidische Systeme, in denen eine Analyse automatisiert abläuft. LOC-Systeme werden meist als Wegwerfteile bzw. Disposables ausgeführt. Zur Vorlagerung von Reagenzien in LOC-Systemen, im Folgenden mikrofluidische Analysesysteme, oder kurz Analysesysteme, genannt, sind z. B. Folienbeutel oder tiefgezogene Folien bzw. Blister bekannt.

Die DE WO2014/090610 A1 beschreibt einen Folienbeutel zum Bevorraten eines Fluids und eine Vorrichtung zum Bereitstellen eines Fluids.

### Offenbarung der Erfindung

Vor diesem Hintergrund werden mit dem hier vorgestellten Ansatz ein Folienbeutel für ein mikrofluidisches Analysesystem, ein mikrofluidisches Analysesystem, ferner ein Verfahren zum Herstellen und ein Verfahren zum Betreiben eines mikrofluidischen Analysesystems gemäß den Hauptansprüchen vorgestellt. Durch die in den abhängigen Ansprüchen aufgeführten Maßnahmen sind vorteilhafte Weiterbildungen und Verbesserungen des im unabhängigen Anspruch angegebenen Folienbeutels sowie des mikrofluidischen Analysesystems möglich.

Ein vorgestellter Folienbeutel kann ein Fluid so vorlagern, dass das Fluid in einem mikrofluidischen Analysesystem gezielt freigesetzt werden kann. Ein vorgestelltes mikrofluidisches Analysesystem kommt dabei mit einem geringen Platzbedarf für den Folienbeutel aus, ohne dass der Folienbeutel viel Grundfläche auf dem Analysesystem einnimmt.

Es wird ein Folienbeutel für ein mikrofluidisches Analysesystem mit folgenden Merkmalen vorgestellt:
einem Folienbeutelboden;
einer gegenüberliegend zum Folienbeutelboden angeordneten Folienbeutelöffnung; und
einer zwischen dem Folienbeutelboden und der Folienbeutelöffnung angeordneten Peelnaht, die dazu ausgeformt ist, um einen geschlossenen Reagenzienaufnahmebereich zwischen der Peelnaht und dem Folienbeutelboden und einen Schlauch zwischen der Peelnaht und der Folienbeutelöffnung zu erzeugen, wobei der Reagenzienaufnahmebereich eine sich zwischen der Peelnaht und dem Folienbeutelboden erstreckende Reagenzienaufnahmelänge aufweist und der Schlauch eine sich zwischen der Peelnaht und der Folienbeutelöffnung erstreckende Schlauchlänge aufweist, die zumindest fünf Prozent der Reagenzienaufnahmelänge beträgt.

Der Reagenzienaufnahmebereich kann mit einem Fluid, insbesondere einer Flüssigkeit gefüllt sein. Die Peelnaht ist ausgebildet, um sich bei einem vorbestimmten Druck auf den mit Fluid gefüllten Reagenzienaufnahmebereich zu lösen. Somit kann die Peelnaht als eine lösbare Naht aufgefasst werden. Ein Verhältnis zwischen der Reagenzienaufnahmelänge und der Schlauchlänge kann so gewählt sein, dass die Reagenzienaufnahmelänge um ein Vielfaches länger als die Schlauchlänge ist. Ein Wert der Schlauchlänge kann entsprechend zumindest fünf Prozent eines Werts der Reagenzienaufnahmelänge betragen. Gemäß unterschiedlicher Ausführungsformen kann die Schlauchlänge beispielsweise auch zumindest zehn, zwanzig, dreißig, vierzig oder fünfzig Prozent der Reagenzienaufnahmelänge betragen. Der Folienbeutelboden kann durch Falten einer Folie des Folienbeutels erzeugt sein oder durch eine Siegelnaht erzeugt sein, durch die zwei Folien oder Folienabschnitte miteinander verbunden sind.

Ein hier vorgestellter Ansatz schafft den Vorteil, dass das Fluid wie beispielsweise ein Reagenz dicht in dem beispielsweise als ein Reagenzbehälter ausgeformten Folienbeutel vorlagerbar ist und bei Bedarf durch den Druck auf den Reagenzienaufnahmebereich über den Schlauch gezielt freigesetzt werden kann. Das Fluid, beispielsweise das Reagenz, kann im Folienbeutel integriert sicher vorgelagert werden, um ein manuelles Befüllen des Analysesystems zu vermeiden und somit eine Benutzung zu vereinfachen und eine Fehlbedienung sowie die Gefahr von Kontaminationen auszuschließen. Bei Bedarf ist eine gezielte, automatisierte Freisetzung des Fluids zum Analysebeginn über den Schlauch möglich.

Der Folienbeutel kann mindestens eine den Folienbeutelboden mit der Folienbeutelöffnung verbindende fluiddichte Begrenzungslinie aufweisen. Eine Begrenzungslinie kann beispielsweise durch eine dicht verschließende Siegelnaht erzeugt sein, die zwei aufeinanderliegende Folien oder Folienabschnitte des Folienbeutels miteinander verbindet. Durch eine Siegelnaht kann beispielsweise ein schlauchförmiger Folienbeutel realisiert werden. Die Begrenzungslinie ist ausgebildet, um sich bei einem vorbestimmten Druck auf einen mit einem Fluid gefüllten Reagenzienaufnahmebereich des Folienbeutels nicht zu lösen oder aufzuplatzen.

In einer allgemeinen Form kann die Begrenzungslinie auch als eine gedachte Linie zwischen dem Folienbeutelboden und der Folienbeutelöffnung angesehen werden. Dies kann beispielsweise bei einem nahtlos ausgeführten Folienbeutel der Fall sein.

Gemäß einer Ausführungsform kann der Folienbeutel zwei gegenüberliegend zueinander angeordnete fluiddichte Begrenzungslinien aufweisen. Dabei kann eine der Begrenzungslinien durch eine Knicklinie und die andere der Begrenzungslinien durch eine Siegelnaht erzeugt sein. Auch können beide Begrenzungslinien durch eine Siegelnaht erzeugt sein, beispielsweise wenn der Folienbeutel aus zwei aufeinanderliegenden Folien hergestellt wird. Dabei kann eine zum Ausformen der Begrenzungslinie verwendete Siegelnaht am seitlichen Rand zweier aufeinanderliegender Folienabschnitte liegen oder von einem solchen Rand beabstandet angeordnet sein.

Gemäß einer Ausführungsform kann zumindest eine weitere Begrenzungslinie vorgesehen sein, die zwischen, beispielsweise mittig zwischen den bereits genannten zwei Begrenzungslinien verläuft. Auf diese Weise können der Reagenzienaufnahmebereich und der Schlauch in zwei fluidisch voneinander getrennte Abschnitte aufgeteilt werden. Auch kann der Folienbeutel zwei als Knicklinien ausgeführte Begrenzungslinien und eine zwischen den Knicklinien angeordnete und als Siegelnaht ausgeführte Begrenzungslinie aufweisen.

Eine Breite einer Begrenzungslinie kann durch eine Breite einer die Begrenzungslinie bildenden Siegelnaht oder Knicklinie definiert sein.

Eine Breite der zumindest einen Begrenzungslinie kann im Bereich des Schlauchs und im Reagenzienaufnahmebereich gleich sein. In einer einfachsten Ausführungsform kann die zumindest eine Begrenzungslinie im Bereich des Schlauchs und im Reagenzienaufnahmebereich auch komplett identisch ausgebildet sein. Dadurch kann der Folienbeutel kostengünstig hergestellt werden.

Alternativ kann eine Breite zumindest einer der Begrenzungslinien im Bereich des Schlauchs breiter sein, als eine Breite dieser Begrenzungslinie im Reagenzienaufnahmebereich. Dadurch kann das Totvolumen des Schlauchs geringer ausfallen, als das Totvolumen des Reagenzienaufnahmebereichs. Dadurch kann beim Entleeren weniger Fluid im Schlauch verbleiben, was eine vollständige Entleerung des Reagenzienaufnahmebereichs ermöglicht. Gemäß einer Ausführungsform kann der eine Länge zwischen einem oder zwei und vierzig Millimeter aufweisen. Die Reagenzienaufnahmelänge kann eine Länge zwischen fünf und einhundert Millimeter aufweisen. Die Schlauchlänge kann eine Länge zwischen zwei und einhundert Millimeter aufweisen. Die zumindest eine Begrenzungslinie kann im Bereich des Schlauchs eine Breite zwischen zweihundert Mikrometer und zwanzig Millimeter aufweisen. Genannte Abmessungen können einen Folienbeutel schaffen, der ein zweckmäßiges Fluidvolumen aufnehmen kann, wobei der Folienbeutel beispielsweise in aufrechter Positionierung ideal für eine platzsparende Aufnahme in ein mikrofluidisches Analysesystem geeignet ist.

Im Reagenzienaufnahmebereich kann ein Fluid aufgenommen sein, das für eine zukünftige Verwendung in dem Reagenzienaufnahmebereich vorgelagert ist. Das Fluid kann beispielsweise vor der Herstellung der Peelnaht in den Folienbeutel eingefüllt worden sein.

Ein mikrofluidisches Analysesystem umfasst einen Behälter mit zumindest einer ersten Schlauchkammer und einer benachbart angeordneten zweiten Schlauchkammer und zumindest einen ersten Folienbeutel und einen benachbart angeordneten zweiten Folienbeutel. Zumindest ein die Folienbeutelöffnung umfassender Teilabschnitt des Schlauchs des ersten Folienbeutels ist von der ersten Schlauchkammer aufgenommen und zumindest ein die Folienbeutelöffnung umfassender Teilabschnitt des Schlauchs des zweiten Folienbeutels ist von der zweiten Schlauchkammer aufgenommen. Der Reagenzienaufnahmebereich des ersten Folienbeutels und der Reagenzienaufnahmebereich des zweiten Folienbeutels sind dabei außerhalb der ersten und der zweiten Schlauchkammer angeordnet.

Ein beschriebenes Analysesystem hat den Vorteil, dass das beispielsweise im Reagenzienaufnahmebereich aufgenommenes Fluid nach einer möglichen Freisetzung nicht nur über den Schlauch gezielt geleitet werden kann, sondern durch die Schlauchkammern des Behälters sicher aufgefangen werden kann. Eine Freisetzung des Fluids nach außen kann dabei vermieden werden. Es ist beispielsweise auch möglich, in den Schlauchkammern des Behälters bereits ein weiteres Fluid vorzulagern, das sich nach der Freisetzung des Fluids im Reagenzienaufnahmebereich mit dem freigesetzten Fluid vermischen soll.

Von Vorteil ist es, wenn das Analysesystem gemäß einer Ausführungsform einen weiteren Folienbeutel und eine weitere Schlauchkammer aufweist. Der weitere Folienbeutel kann dabei zwischen dem ersten und dem zweiten Folienbeutel und die weitere Schlauchkammer zwischen der ersten und der zweiten Schlauchkammer angeordnet sein, wobei zumindest ein die Folienbeutelöffnung umfassender Teilabschnitt des Schlauchs des weiteren Folienbeutel von der dritten Schlauchkammer aufgenommen sein kann. Die Schlauchlänge des weiteren Folienbeutels kann eine kürzere Länge aufweisen, als die Schlauchlänge des ersten Folienbeutels und die Schlauchlänge des zweiten Folienbeutels.

Indem die Schläuche, der sich im äußeren Bereich des Analysesystems befindlichen Folienbeutel länger ausgeführt sind, als der Schlauch des sich in der Mitte befindlichen Folienbeutels, kann sichergestellt werden, dass bei einem gemeinsamen Entleerungsvorgang alle Schläuche in ihren vorgesehenen Schlauchkammern angeordnet bleiben und nicht aus den Schlauchkammern springen. Ein zu erwartender Druck zum Entleeren der Reagenzienaufnahmebereiche auf die Reagenzienaufnahmebereiche kann nämlich bewirken, dass sich die Schläuche der äußeren Folienbeutel während des Druckvorgangs stärker nach außen bewegen, als der Schlauch eines innenliegenden Folienbeutels, der durch den Druck verhältnismäßig wenig bewegt wird.

Das Analysesystem kann durch zusätzliche Folienbeutel und entsprechend angeordnete zusätzliche Schlauchkammern in dem Behälter beliebig weit erweitert werden. Dabei ist es von Vorteil, darauf zu achten, dass eine Länge der Schläuche nach außen hin zunimmt, wobei eine Länge der Schläuche innenliegender Folienbeutel kürzer ausgeformt werden kann.

Das Analysesystem kann eine Stempeleinrichtung aufweisen, die ausgebildet ist, um eine Kraft auf zumindest einen der Reagenzienaufnahmebereiche auszuüben, wobei die Kraft dazu ausgebildet ist, um einen zum Lösen der Peelnaht geeigneten Druck im Inneren des Reagenzienaufnahmebereichs aufzubauen, wodurch das zumindest eine Fluid durch den zumindest einen Schlauch in die zumindest eine Schlauchkammer fließen kann. Eine Stempeleinrichtung kann beispielsweise durch den Einsatz eines Stempels und gegebenenfalls eine geeignete Mechanik bewirken, dass das das Fluid für eine weitere Verwendung aus dem Reagenzienaufnahmebereich herausgedrückt und somit freigegeben wird.

Von Vorteil ist es ferner, wenn der Behälter eine Vorlagerungskammer mit einem Boden und einer dem Boden gegenüberliegend angeordneten Stempelöffnung zum Einführen eines Stempels einer Stempeleinrichtung aufweist. Die Schlauchkammern können über Verbindungsöffnungen in die Vorlagerungskammer münden. Die Reagenzienaufnahmebereiche können schräg zu dem Boden nebeneinanderstehend innerhalb der Vorlagerkammer angeordnet sein. Eine beschriebene Anordnung der Folienbeutel in einer beispielsweise kastenförmig ausgeformten Vorlagerungskammer lässt ein Ausdrücken der Folienbeutel durch einen von oben wirkenden Stempel, der beispielsweise auf die Ausformung des Kastens angepasst sein kann, auf die Reagenzienaufnahmebereiche zu. Durch die Vorlagerungskammer können die Folienbeutel während des Ausdrückens in ihrer Position gehalten werden. Die Anordnung von beispielsweise speziell auf die Maße der Schläuche ausgeformten Verbindungsöffnungen, die von der Vorlagerungskammer in die Schlauchkammern münden, bietet den Vorteil, dass die Schlauchkammern weitestgehend geschlossen ausgeformt sein können, sodass das aufgenommene Fluid nicht zurückfließen, oder beim Einfließen wieder aus den Schlauchkammern herausspritzen kann. Die Verbindungsöffnungen können beispielsweise als Schlitze in einer einem Schlauchkammerboden gegenüberliegenden Wand der jeweiligen Schlauchkammer ausgeformt sein, wobei die Schlitze zumindest einen Teilabschnitt des Schlauchs aufnehmen können.

Gemäß einer weiteren Ausführungsform kann das Analysesystem eine elastische Membran aufweisen, die dazu ausgeformt ist, um die Stempelöffnung zu schließen. Ein beschriebener Ansatz mit der Membran ermöglicht, dass das Fluid auch während des Freisetzens des Fluids aus dem Reagenzienaufnahmebereich stets fluidisch dicht, gemäß einer Ausführungsform hermetisch, von der Stempeleinrichtung getrennt bleiben kann. Die Membran kann dazu ausgeformt sein, um sich beispielsweise während eines Eindrückens durch beispielsweise den Stempel, von einer Unterseite des Stempels her um die Konturen des Stempels zu legen und dadurch den Stempelvorgang in keinerlei Hinsicht behindern. Die Membran kann somit eine im Besonderen hygienische Variante zur Entleerung der Reagenzienaufnahmebereiche ermöglichen.

Ein Verfahren zum Herstellen eines mikrofluidischen Analysesystems weist die folgenden Schritte auf:
Bereitstellen des Behälters mit zumindest der ersten Schlauchkammer und der zweiten Schlauchkammer;
Bereitstellen von zumindest dem ersten Folienbeutel und dem zweiten Folienbeutel; und
Anordnen der zwei Folienbeutel benachbart zueinander, wobei zumindest ein Teilabschnitt des ersten Schlauchs, der die erste Folienbeutelöffnung umfasst, von der erste Schlauchkammer aufgenommen wird und zumindest ein Teilabschnitt des zweiten Schlauchs, der die zweite Folienbeutelöffnung umfasst, von der zweiten Schlauchkammer aufgenommen wird, wobei der erste Reagenzienaufnahmebereich des ersten Folienbeutels und der zweite Reagenzienaufnahmebereich des zweiten Folienbeutels außerhalb der ersten und der zweiten Schlauchkammer angeordnet werden.

Ein Verfahren zum Betreiben eines mikrofluidischen Analysesystems weist die folgenden Schritte auf:
Ausüben einer Kraft auf zumindest einen der Reagenzienaufnahmebereiche, um einen zum Lösen der Peelnaht geeigneten Druck im Inneren des Reagenzienaufnahmebereichs aufzubauen, wodurch das zumindest eine Fluid durch den zumindest einen Schlauch in die zumindest eine Schlauchkammer fließen kann.

Die Kraft kann unter Verwendung eines mechanischen Stempels ausgeübt werden, aber auch in einer weiteren Ausführungsform durch Auslenken einer Membran durch Druckluft.

Ausführungsbeispiele der Erfindung sind in den Zeichnungen dargestellt und in der nachfolgenden Beschreibung näher erläutert. Es zeigt:
Fig. 1 einen schematischen Querschnitt eines Folienbeutels gemäß einem Ausführungsbeispiel;
Fig. 2 einen schematischen Querschnitt eines Folienbeutels gemäß einem Ausführungsbeispiel;
Fig. 3 einen schematischen Querschnitt eines Folienbeutels gemäß einem Ausführungsbeispiel;
Fig. 4 einen schematischen Querschnitt eines mikrofluidischen Analysesystems gemäß einem Ausführungsbeispiel;
Fig. 5 eine perspektivische Aufsicht eines Analysesystems mit einer Vorlagerungskammer gemäß einem Ausführungsbeispiel;
Fig. 6 einen schematischen Querschnitt eines Analysesystems gemäß einem Ausführungsbeispiel;
Fig. 7 einen schematischen Querschnitt eines Analysesystems gemäß einem Ausführungsbeispiel;
Fig. 8 eine perspektivische Aufsicht eines Analysesystems gemäß einem Ausführungsbeispiel;
Fig. 9 ein Ablaufdiagramm eines Verfahrens zum Herstellen eines Analysesystems gemäß einem Ausführungsbeispiel; und
Fig. 10 ein Ablaufdiagramm eines Verfahrens zum Bereitstellen eines Analysesystems gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

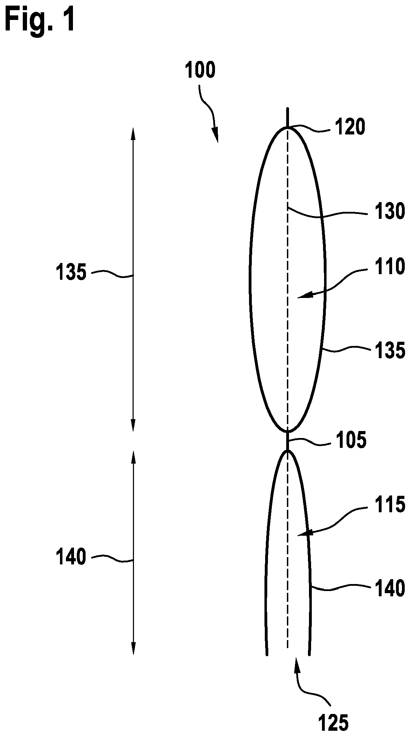

Fig. 1 zeigt einen schematischen Querschnitt eines Folienbeutels 100 gemäß einem Ausführungsbeispiel. Der Folienbeutel 100 ist aus einer Folie ausgeformt. Gemäß dem gezeigten Ausführungsbeispiel ist die Folie entlang einer Knickkante geknickt und aufeinanderliegende Folienabschnitte der an der Knickkante umgeschlagenen Folie sind durch eine Siegelnaht miteinander verbunden. Der Folienbeutel 100 kann auch durch zwei aufeinandergelegte Folien ausgeformt sein, die durch zwei gegenüberliegende Siegelnähte miteinander verbunden sind.

Der Folienbeutel 100 ist durch eine Peelnaht 105 in einen Reagenzienaufnahmebereich 110 und einen Schlauch 115 unterteilt. Der Reagenzienaufnahmebereich 110 ist an einer dem Schlauch abgewandten Seite durch einen Folienbeutelboden 120 verschlossen. Der Schlauch 115 weist an einer dem Reagenzienaufnahmebereich 110 abgewandten Seite eine Folienbeutelöffnung 125 auf. Zwischen dem Folienbeutelboden 120 und der Folienbeutelöffnung 125 verlaufen die zwei Begrenzungslinien 130, die wie bereits beschrieben, durch eine Siegelnaht und/oder durch einen Knick erzeugt sein können.

Im Reagenzienaufnahmebereich 110 angeordnete Abschnitte der Begrenzungslinien 130 weisen eine Reagenzienaufnahmelänge 135 auf. Im Bereich des Schlauchs 115 angeordnete Abschnitte der Begrenzungslinien 130 weisen eine Schlauchlänge 140 auf. Die Schlauchlänge 140 weist eine Länge von zumindest fünf Prozent der Länge der Reagenzienaufnahmelänge 135 auf. Gemäß dem gezeigten Ausführungsbeispiel beträgt die Schlauchlänge 140 mehr als die halbe Länge der Reagenzienaufnahmelänge 135.

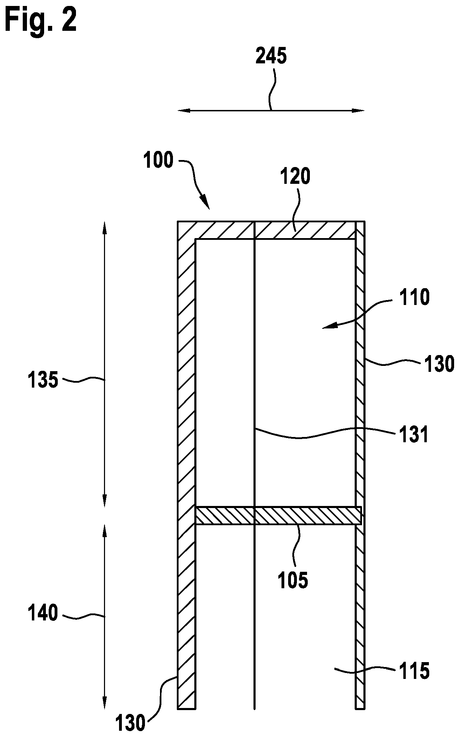

Der Folienbeutel 100 weist angrenzend an die Sollbruchstelle 105, also angrenzend an die Peelnaht 105, eine schlauchförmige Verlängerung in Form des Schlauchs 115 auf. Wenn in dem Reagenzienaufnahmebereich 110 ein Fluid aufgenommenen ist, ist durch den Folienbeutel 100 eine gezielte Steuerung eines Fluidstroms, das aus dem Folienbeutel 100 entweicht, möglich. Die Herstellung dieser verlängerten Folienbeutel 100 kann in demselben Herstellungsprozess erfolgen, wie herkömmliche Folienbeutel 100, ein derartiger Herstellungsprozess wird anhand von Fig. 2 erläutert.

Fig. 2 zeigt einen schematischen Querschnitt eines Folienbeutels 100 gemäß einem Ausführungsbeispiel. Dabei kann es sich um den anhand von Fig. 1 beschriebenen Folienbeutel 100 handeln. Der Folienbeutel 100 weist zwei einander gegenüberliegende Begrenzungslinien 130, einen Folienbeutelboden 120 und eine Peelnaht 105 auf. Eine erste der Begrenzungslinien 130 sowie der Folienbeutelboden 120 weisen eine Siegelnaht auf oder sind durch eine solche Siegelnaht gebildet. Die zweite der Begrenzungslinien 130 ist durch einen Knick gebildet, entlang dem eine Folie, aus dem der Folienbeutel 100 hergestellt ist, gefaltet ist. Gemäß einem alternativen Ausführungsbeispiel ist die zweite der Begrenzungslinien 130 ebenfalls durch eine Siegelnaht gebildet. Die Peelnaht 105 verläuft quer zwischen den Begrenzungslinien 130. Gemäß dem gezeigten Ausführungsbeispiel verlaufen die Begrenzungslinien 130 und der Folienbeutelboden 120 entlang Rändern des Folienbeutels 100 und schließen einen Innenraum des Folienbeutels 100 zu drei Seiten hin ab. Die für den Folienbeutel 100 verwendete Folie kann sich über zumindest eine der Begrenzungslinien 130 und/oder den Boden hinaus erstrecken.

Gemäß einem Ausführungsbeispiel ist optional zumindest eine weitere Begrenzungslinie 131 vorgesehen, die zwischen den Begrenzungslinien 130 verläuft. Durch eine solche weitere Begrenzungslinie werden der Reagenzienaufnahmebereich 110 und der Schlauch 115 je in zwei Kammern unterteilt. Die weitere Begrenzungslinie 131 ist beispielsweise durch eine Siegelnaht gebildet. Die weitere Begrenzungslinie 131 kann mittig oder, außermittig zwischen den Begrenzungslinien 130 verlaufen. Durch eine solche weitere Begrenzungslinie 131 können sogenannte Schlauchbeutel (Stickpacks) hergestellt werden.

Wenn die als Siegelnaht ausgeführte weitere Begrenzungslinie 131 Vorder- und Rückseite des Folienbeutels 100 nicht miteinander verbindet, kann diese Siegelnaht zum Ausformen eines Folienbeutels 100 dienen, bei dem die Begrenzungslinien 130 Knicklinien oder lediglich gedachte Seitenlinien eines schlauchförmigen Folienbeutels 100 darstellen.

Der Folienbeutel 100 weist gemäß diesem Ausführungsbeispiel eine Struktur auf, die dadurch gebildet ist, dass die Folie, hier eine Siegelfolie, entlang einer Kante gefaltet und mit einer Siegelnaht abgedichtet.

Die letzte offene Seite des Folienbeutels 100 wird durch die Peelnaht 105 begrenzt. Zum Öffnen wird der Folienbeutel 100 unter Druck gesetzt, die Peelnaht 105 delaminiert auf und im Reagenzienaufnahmebereich 110 aufgenommene Flüssigkeit wird freigesetzt. Bei der Siegelfolie kann es sich z. B. um Polymerverbundfolien aus polymeren Siegel- und Schutzschichten, z. B. PE, PP, PA, PET und Barriereschichten, in der Regel aufgedampftes Aluminium, aber auch andere Hochbarriereschichten wie EVOH, BOPP, handeln.

Ein gemäß diesem Ausführungsbeispiel dargestellter verlängerter Folienbeutel 100 weist in der in Fig. 2 gezeigten Lage des Folienbeutels 100 unterhalb der Peelnaht 105 die nach unten offene schlauchförmige Verlängerung 115, also den Schlauch 115, auf. Durch den Schlauch 115 kann die freigesetzte Flüssigkeit gezielt in bestimmte Bereiche geleitet werden, ggf. unter Ausnutzung der Gravitation. Weiterhin wird durch den Schlauch 115 vermieden, dass Flüssigkeiten, insbesondere solche mit niedriger Oberflächenspannung, entlang der Außenseite des Folienbeutels 100 nach oben kriechen.

Gemäß einem Ausführungsbeispiel weist der Folienbeutel 100 eine Gesamtlänge kleiner als 150 Millimeter und eine Breite 245 kleiner als 40 Millimeter auf. Beispielsweise weist der Folienbeutelboden eine der Breite 245 entsprechende Länge von fünf bis zwanzig Millimeter, die Reagenzienaufnahmelänge 135 eine Länge von zehn bis fünfzig Millimeter und die Schlauchlänge 140 eine Länge von fünf bis fünfzig Millimeter auf.

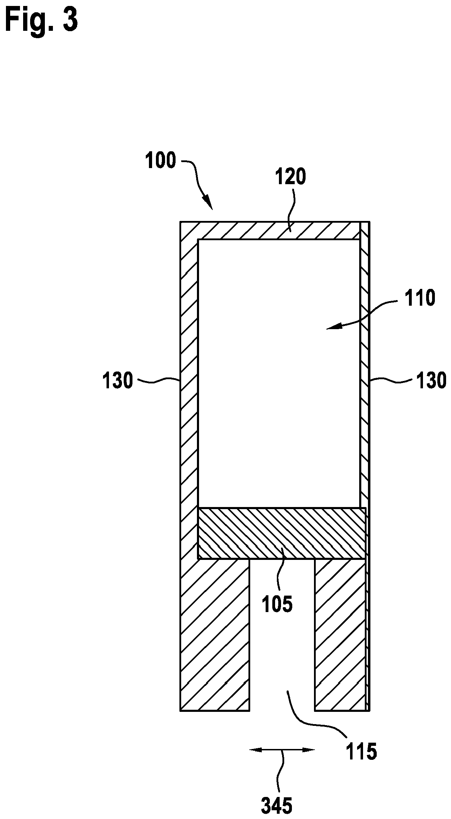

Fig. 3 zeigt einen schematischen Querschnitt eines Folienbeutels 100 gemäß einem Ausführungsbeispiel. Dabei kann es sich um den anhand von Fig. 2 beschriebenen Folienbeutel 100 handeln, mit dem Unterschied, dass gemäß diesem Ausführungsbeispiel die zweite der Begrenzungslinien 130 im Bereich des Schlauchs 115 ebenfalls eine Siegelnaht aufweist und die Siegelnähte der Begrenzungslinien 130 im Bereich des Schlauchs 115 und die Peelnaht 105 breiter ausgeformt sind, als die Siegelnähte der ersten Begrenzungslinie 130 und des Folienbeutelbodens 120 im Bereich des Reagenzienaufnahmebereichs 110.

Gemäß einem Ausführungsbeispiel weisen die als Siegelnähte oder Knicklinien ausgeführten Begrenzungslinien 130 im Bereich des Schlauchs 115 eine Breite auf, die mindestens doppelt so breit ist, wie die Siegelnaht der ersten Begrenzungslinie 130 im Bereich des Reagenzienaufnahmebereichs 110. Beispielsweise weisen die die Begrenzungslinien 130 im Bereich des Schlauchs 115 eine Breite von fünfhundert Mikrometer bis zehn Millimeter auf.

Wenn der Folienbeutel 100 nur eine einzige Begrenzungslinie 130 aufweist, so gelten die genannten Abmessungen und/oder Verhältnisse gemäß einer Ausführungsform in entsprechender Weise für diese eine Begrenzungslinie 130.

Beispielsweise kann der Schlauch 115 dadurch einen ungesiegelten Bereich mit einer Breite 345 zwischen 500 µm bis 10 mm aufweisen. Die Breite 345 des ungesiegelten Bereichs des Schlauchs 115 ist kleiner als die Breite des ungesiegelten Bereichs des Reagenzienaufnahmebereichs 110. Beispielsweise ist die Breite 345 des ungesiegelten Bereichs des Schlauchs 115 kleiner als zwei Drittel oder kleiner als die Hälfte der Breite des ungesiegelten Bereichs des Reagenzienaufnahmebereichs 110.

Gemäß einem Ausführungsbeispiel weist nur einer der Begrenzungslinien 130 im Bereich des Schlauchs 115 eine Siegelnaht auf, die Breiter ist als die Siegelnaht im Reagenzienaufnahmebereich 110.

Gemäß einem Ausführungsbeispiel weist die Peelnaht 105 eine Breite auf, die in etwa einer Breite der Siegelnaht im Reagenzienaufnahmebereich 110 entspricht.

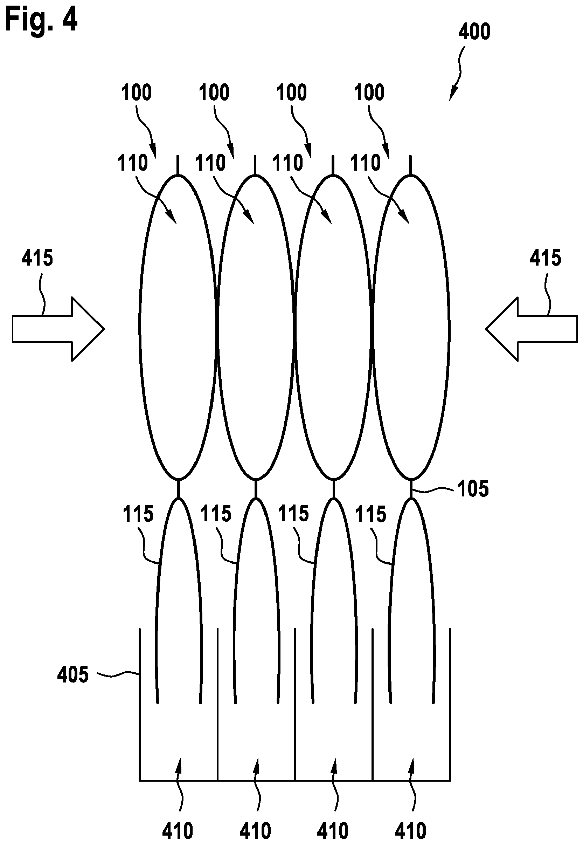

Fig. 4 zeigt einen schematischen Querschnitt eines mikrofluidischen Analysesystems 400 gemäß einem Ausführungsbeispiel. Das mikrofluidische Analysesystem 400 weist zumindest zwei Folienbeutel 100 und einen Behälter 405 mit zumindest zwei Schlauchkammern 410 auf. Bei den Folienbeuteln 100 kann es sich um Folienbeutel 100 handeln, wie sie anhand der vorangegangenen Figuren beschrieben sind.

Gemäß diesem Ausführungsbeispiel sind eine Mehrzahl von Folienbeuteln 100, hier beispielhaft vier Folienbeutel 100, benachbart zueinander angeordnet, wobei die Schläuche 115 der Folienbeutel 100 zumindest mit einem die Folienbeutelöffnung aufweisenden Abschnitt von den gemäß diesem Ausführungsbeispiel vier Schlauchkammern 410 des Behälters 405 aufgenommen sind. Dabei ist jedem Folienbeutel 100 eine der Schlauchkammern 410 des Behälters 405 zugeordnet.

Die Reagenzienaufnahmebereiche 110 sind außerhalb der Schlauchkammern 410 angeordnet. Gemäß diesem Ausführungsbeispiel sind die Reagenzienaufnahmebereiche 110 in einer aufrechten Position über den Schlauchkammern 410 und den Schläuchen 115 angeordnet, wobei die Schläuche 115 jeweils nach unten hängend durch Öffnungen der Schlauchkammern 410 in die Schlauchkammern 410 hineingeführt sind.

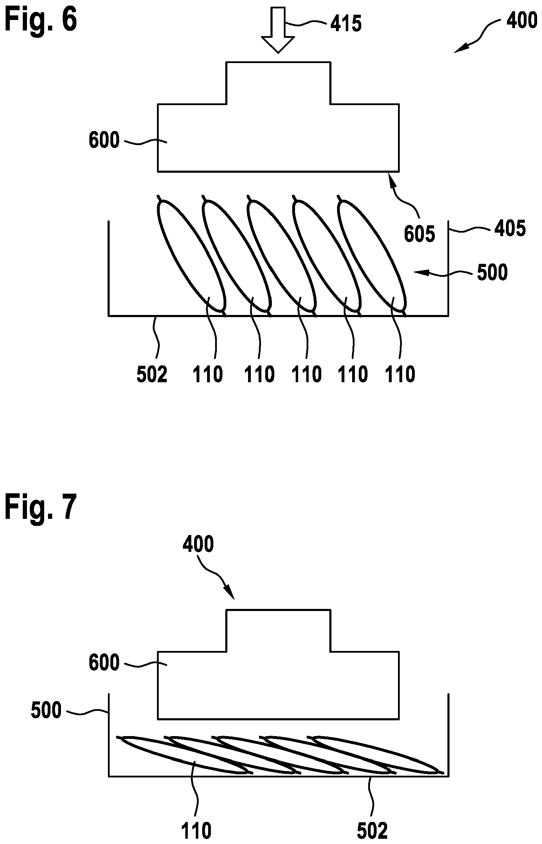

Durch Ausüben einer Kraft 415 auf die Reagenzienaufnahmebereiche 110 der Folienbeutel 100 können die Peelnähte 105 der Folienbeutel 100 aufgetrennt und der Inhalt der Reagenzienaufnahmebereiche 110 in die Schläuche 115 gedrückt werden. Die Kraft 415 kann durch eine geeignete Stempeleinrichtung aufgebracht werden, die zumindest einen Stempel aufweisen kann, wie er beispielsweise in Fig. 6 gezeigt ist. Eine solche Stempeleinrichtung weist gemäß einem Ausführungsbeispiel eine Mechanik auf, über die der Stempel mit dem Behälter 405 gekoppelt ist.

Kern dieses Ansatzes ist eine eng gepackte Anordnung mehrerer Folienbeutel 100 in einem mikrofluidischen Analysesystem 400, bei dem sich die Folienbeutel 100 beim Öffnen durch eine gemäß diesem Ausführungsbeispiel quer zu den Begrenzungslinien 130 im Bereich der Reagenzienaufnahmebereiche 110 ausgeübte Kraft 415 gegenseitig unter Druck setzen. Dieses Konzept ermöglicht eine sehr platzsparende Anordnung der Folienbeutel 100 und ermöglicht gleichzeitig ein kontrolliertes Entleeren unterschiedlicher Flüssigkeiten in separate mikrofluidische Kavitäten 410 in Form der Schlauchkammern 410. Vorteile sind neben einer geringen Inanspruchnahme einer Grundfläche der Folienbeutel 100 auf dem Analysesystem 400, dass die Folienbeutel 100 in einem gemeinsamen Behälter 405 auf dem LOC-System 400, also dem Analysesystem 400, angeordnet werden können. Das Bauteil in Form des Behälters 405 ist dadurch wenig komplex gestaltbar und kann z. B. durch einen einfachen Spritzguss aus einem flüssigkeitsundurchlässigen Material hergestellt sein. Die Folienbeutel 100 können durch einen gemeinsamen Aktuator, z. B. einen Stempel, oder durch eine pneumatische Auslenkung einer Membran zur Druckübertragung geöffnet werden, der die Kraft 415 auf die Folienbeutel 100 ausübt. Dies lässt eine einfache zum Analysesystem 400 gehörende Peripherie zu.

Die Schlauchkammern 410 können beispielsweise ein Volumen zwischen 100 µL und 5 mL aufweisen. Die beschriebene Anordnung bietet den Vorteil, dass durch eine Drehung der Folienbeutel 100 um 90° in die aufrechte Position der Bedarf an Grundfläche gering ausfallen kann. Die Schläuche 115 münden in jeweils separate Kavitäten 410 in Form der Schlauchkammern 410 auf dem Analysesystem 400. Zum Ausdrücken der Folienbeutel 100 kann, wie durch die Pfeile angedeutet, die Kraft 415 auf die Folienbeutel ausgeübt werden, z. B. mit dem Stempel. Die Folienbeutel 100 können dabei die Kraft 415 aufeinander ausüben, die zum Aufbrechen der Peelnähte 105 und zum Entleeren der Flüssigkeiten in die Schlauchkammern 410 führt. Durch die Schläuche 115 kann hierbei vermieden werden, dass die Flüssigkeiten miteinander in Kontakt kommen. Die Kraft 415 kann auch in anderer Richtung, z. B. in Richtung der Zeichnungsebene, eingebracht werden. Die Schlauchkammern 410 können durch mikrofluidische Kanäle kontaktiert sein, durch die die Flüssigkeiten je nach Bedarf herausgepumpt werden können. In einem vorteilhaften alternativen Ausführungsbeispiel ist die Länge der Schläuche 115 nicht gleich, sondern an den zu erwarteten Versatz der Schlauchposition durch den Ausdrückvorgang angepasst. Im dargestellten Fall ist beispielsweise zu erwarten, dass die beiden mittleren Schläuche 115 ihre Position beim Ausdrücken nur wenig verändern, während die beiden äußeren Schläuche 115 beim Ausdrücken in Richtung der von außen wirkenden Kräfte 415 verschoben werden. Die Funktion der Anordnung bleibt erhalten, solange das untere Ende der Schläuche 115 am Ende des Ausdrückvorgangs in die zugehörigen Schlauchkammern 410 mündet. Dementsprechend ist es vorteilhaft, die Länge der äußeren Schläuche 115 größer zu wählen als für die inneren Schläuche 115. Hierdurch kann zum einen für die inneren Schläuche 115 Material gespart werden, zum anderen wird die Zuverlässigkeit erhöht, da ein Herausrutschen der Schläuche 115 aus den Schlauchkammern 410 beim Ausdrücken vermieden werden kann.

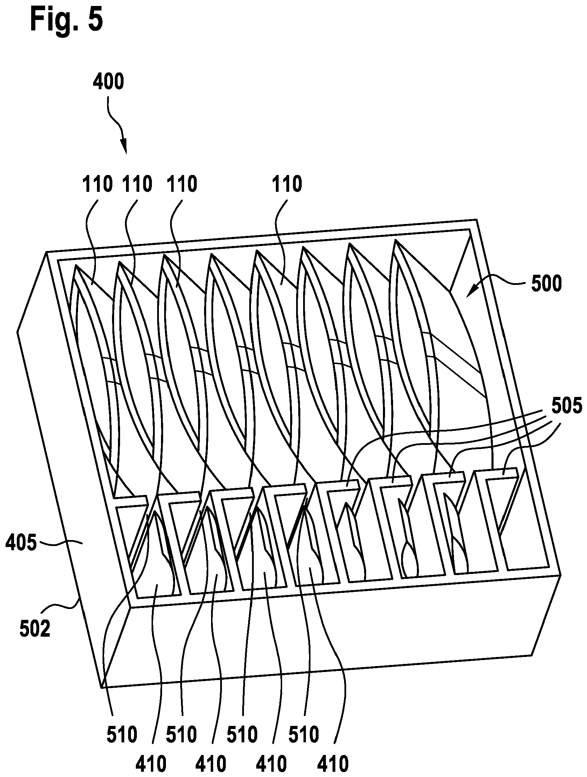

Fig. 5 zeigt eine perspektivische Aufsicht eines Analysesystems 400 mit einer Vorlagerungskammer 500 gemäß einem Ausführungsbeispiel. Dabei kann es sich bei dem Analysesystem 400 um das anhand von Fig. 4 beschriebene Analysesystem 400 handeln.

Gemäß diesem Ausführungsbeispiel sind die Reagenzienaufnahmebereiche 110 der Folienbeutel von einem mikrofluidischen Vorlagerungselement 500, im Folgenden als Vorlagerungskammer 500 bezeichnet, aufgenommen. Die Vorlagerungskammer 500 ist im Wesentlichen kastenförmig ausgeformt und weist einen Boden 502 und zwei Seitenwände und eine Rückwand auf, die hier beispielhaft senkrecht zum Boden 502 angeordnet sind. Die Rückwand ist gegenüberliegend zu den Schlauchkammern 410 angeordnet, die in die Vorlagerungskammer 500 münden. Die Folienbeutel sind so in der Vorlagerungskammer 500 angeordnet, dass die Begrenzungslinien längs der Seitenwände ausgerichtet sind. Die Folienböden der Folienbeutel sind schräg zu den Seitenwänden und dem Boden 502 ausgerichtet.

Gemäß diesem Ausführungsbeispiel sind die Reagenzienaufnahmebereiche 110 der Folienbeutel 100 leicht schräg auf den Boden 502 gestellt, was ein Ausdrücken von oben, also von einer dem Boden 502 gegenüberliegenden Seite her z. B. mittels eines Stempels der rechtwinklig zur Zeichenebene, also beispielsweise rechtwinklig zum Boden 502, die Kraft aufbringt, ermöglicht, bzw. ein vollständiges Verdrängen des Folienbeutel-Inhalts durch den Stempel ermöglicht. Die Schlauchkammern 410 weisen hier an den Reagenzienaufnahmebereichen 110 der Folienbeutel 100 zugewandten Seiten jeweils eine Wandung 505 mit einer Verbindungsöffnung 510, ausgeformt durch beispielsweise einen Schlitz in der Wandung 505, auf. Die Verbindungsöffnungen 510 schaffen gemäß diesem Ausführungsbeispiel eine Verbindung zwischen der Vorlagerungskammer 500 und den angrenzenden Schlauchkammern 410. Die Schläuche der Folienbeutel 100 sind gemäß diesem Ausführungsbeispiel in die Verbindungsöffnungen 510 eingelegt. Hierdurch können die Schläuche besonders sicher geführt und es kann ein Herausrutschen der Schläuche vermieden werden.

Fig. 6 zeigt einen schematischen Querschnitt eines Analysesystems 400 gemäß einem Ausführungsbeispiel. Dabei kann es sich um das anhand von Fig. 5 beschriebene Analysesystem 400 handeln, mit dem Unterschied, dass die Schläuche und die Schlauchkammern nicht dargestellt sind.
Verdeutlicht ist hier ein bevorstehendes Ausdrücken der Reagenzienaufnahmebereiche 110 der Folienbeutel in der Vorlagerungskammer 500. Dazu ist ein Stempel 600 vorgesehen, der gemäß diesem Ausführungsbeispiel über der Vorlagerungskammer 500 schwebend, auf einer dem Boden 502 abgewandten Seite der Vorlagerungskammer 500 angeordnet ist. Eine den Reagenzienaufnahmebereichen 110 zugewandte Unterseite 605 des Stempels 600 ist gemäß diesem Ausführungsbeispiel plan ausgeführt oder an eine Kontur des Bodens 502 angepasst, damit der Boden 502 den Stempel 600 passgenau aufnehmen kann und die Reagenzienaufnahmebereiche 110 so vollständig ausgedrückt werden können. Zum Ausdrücken der Reagenzienaufnahmebereiche 110 wird der Stempel 600 in die Vorlagerungskammer 500 eingeführt. Dazu kann eine Stempeleinrichtung eine geeignete Führung zum Führen des Stempels 600 aufweisen, die mit dem Behälter 405 verbunden ist oder durch eine Struktur des Behälters 405 ausgeformt wird.

Fig. 7 zeigt einen schematischen Querschnitt eines Analysesystems 400 gemäß einem Ausführungsbeispiel. Dabei kann es sich um das anhand von Fig. 6 beschriebene Analysesystem 400 handeln. Die gemäß diesem Ausführungsbeispiel zuvor schräggestellten Reagenzienaufnahmebereiche 110 der Folienbeutel sind gemäß diesem Ausführungsbeispiel durch den Stempel 600 nahezu vollständig entleert worden und liegen auf dem Boden 502 auf. Der Stempel 600 ist gemäß diesem Ausführungsbeispiel aufgrund des Ausdrückvorgangs innerhalb der Vorlagerungskammer 500 angeordnet.

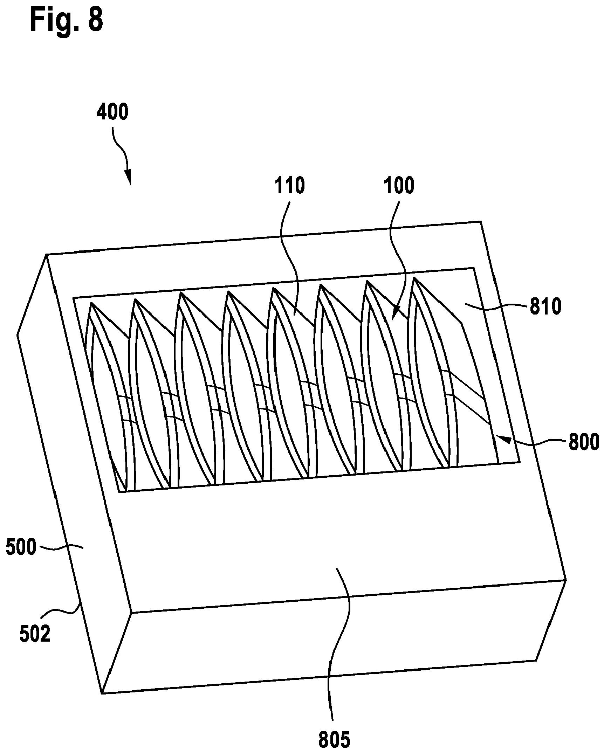

Fig. 8 zeigt eine perspektivische Aufsicht eines Analysesystems 400 gemäß einem Ausführungsbeispiel. Dabei kann es sich bei dem Analysesystem 400 um das anhand von Fig. 5 beschriebene Analysesystem 400 handeln.

Das Analysesystem 400 weist gemäß diesem Ausführungsbeispiel einen Deckel 805 mit einer Durchgangsöffnung 810 auf, die durch eine Membran 800 verschlossen sein kann.

Der Deckel 805 ist auf einer dem Boden 502 gegenüberliegenden Seite des Analysesystems 400 angeordnet und erstreckt sich über das Analysesystem 400 mitsamt der Vorlagerungskammer 500. Die Schlauchkammern sind gemäß diesem Ausführungsbeispiel durch den Deckel 805 verschlossen und nicht sichtbar. Der Deckel 805 ist gemäß diesem Ausführungsbeispiel teilweise über die Reagenzienaufnahmebereiche 110 der Folienbeutel 100 erstreckt angeordnet, wobei die Stempelöffnung 810 des Deckels 805 im Bereich der Reagenzienaufnahmebereiche 110 angeordnet ist und einen Durchgang zu einem Außenbereich des Analysesystems 400 schafft. Die Stempelöffnung 810 ist gemäß diesem Ausführungsbeispiel als ein rechteckiger Durchbruch im Deckel 805 ausgeformt. Der Deckel 805 überdeckt die Reagenzienaufnahmebereiche 110 dabei lediglich an einer Ober- und Unterseite, also im Bereich der Folienbeutelböden und im Bereich der Peelnähte, um ein Herausfallen bzw. Verdrehen der Folienbeutel 100 zu verhindern. Alternativ kann die Stempelöffnung 810 in der Vorlagerungskammer 500, z. B. im Boden 502, angeordnet sein. Die Folienbeutel 100 können dann von einer Rückseite der Vorlagerungskammer 500, also vom Boden 502 her, ausgedrückt werden.

Gemäß diesem Ausführungsbeispiel ist die Stempelöffnung 810 durch eine flexible Membran 800 verschlossen, die beim Ausdrücken der Folienbeutel 100 durch den Stempel in die Vorlagerungskammer 500 hinein auslenkbar ist. Dies hat den Vorteil, dass der Stempel und die Flüssigkeiten beim Ausdrückvorgang hermetisch voneinander getrennt bleiben und ein Austreten von Flüssigkeiten in die Umgebung sicher vermieden werden kann. Weiterhin kann zum Ausdrücken der Folienbeutel 100 ein pneumatischer oder hydraulischer Druck, der die flexible Membran 800 gegen die Folienbeutel 100 auslenkt und somit die Ausdrückkraft appliziert, ausgeübt werden. In diesem Ausführungsbeispiel kann der Raum, in dem die auch als Stickpacks bezeichneten Reagenzienaufnahmebereiche 110, angeordnet sind, über einen Kanal belüftet sein, um einen Druckausgleich zu ermöglichen.

Alternativ zu einer Auslenkung durch den Stempel kann die Membran 800 auch durch Druckluft ausgelenkt werden.

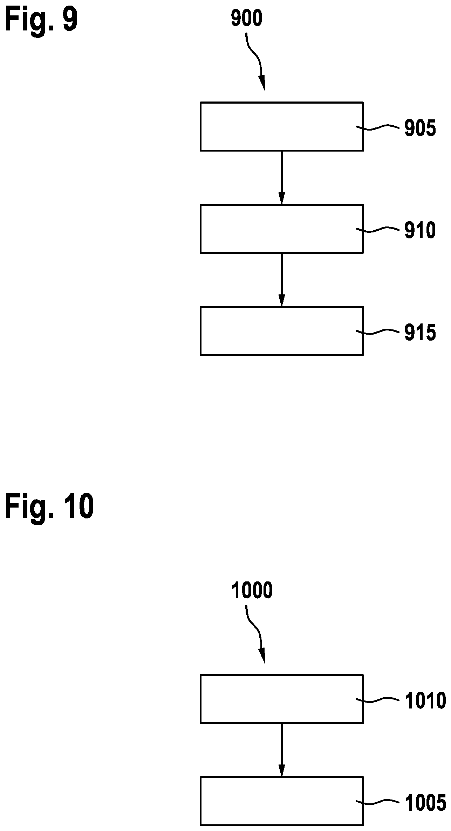

Fig. 9 zeigt ein Ablaufdiagramm eines Verfahrens zum Herstellen 900 eines Analysesystems gemäß einem Ausführungsbeispiel. Dabei kann es sich um eines der anhand der Figuren 4 bis 8 beschriebenen Analysesysteme handeln. In einem Schritt des Bereitstellens 905 wird der Behälter mit einer Mehrzahl von Schlauchkammern bereitgestellt. In einem weiteren Schritt des Bereitstellens 910 werden eine Mehrzahl von Folienbeuteln bereitgestellt. In einem letzten Schritt des Anordnens 915 werden die Folienbeutel benachbart zueinander angeordnet, wobei Teilabschnitte der Schläuche, die die Folienbeutelöffnungen umfassen, je von einer der Schlauchkammern aufgenommen werden. Dabei verbleiben die Reagenzienaufnahmebereiche der Folienbeutel außerhalb der Schlauchkammern.

Fig. 10 zeigt ein Ablaufdiagramm eines Verfahrens zum Bereitstellen 1000 eines Analysesystems gemäß einem Ausführungsbeispiel. Dabei kann es sich um eines der anhand der Figuren 4 bis 8 beschriebenen Analysesysteme handeln.

In einem Schritt des Ausübens 1005 wird die Kraft auf zumindest einen der Reagenzienaufnahmebereiche ausgeübt, wobei die Kraft dazu ausgebildet ist, um einen zum Lösen der Peelnaht geeigneten Druck im Inneren des Reagenzienaufnahmebereichs aufzubauen, wodurch das zumindest eine Fluid durch den zumindest einen Schlauch in die zumindest eine Schlauchkammer fließen kann. Gemäß einem Ausführungsbeispiel wird die Kraft durch einen Stempel ausgeübt, der in einem optionalen Schritt 1010 betätigt wird. Die Betätigung kann beispielsweise unter Verwendung einer mechanischen oder elektromechanischen Betätigungseinrichtung ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Folienbeutel (100) für ein mikrofluidisches Analysesystem (400) mit folgenden Merkmalen:
einem Folienbeutelboden (120);
einer gegenüberliegend zum Folienbeutelboden (120) angeordneten Folienbeutelöffnung (125); und
einer zwischen dem Folienbeutelboden (120) und der Folienbeutelöffnung (125) angeordneten Peelnaht (105), die dazu ausgeformt ist, um einen geschlossenen Reagenzienaufnahmebereich (110) zwischen der Peelnaht (105) und dem Folienbeutelboden (120) und einen Schlauch (115) zwischen der Peelnaht (105) und der Folienbeutelöffnung (125) zu erzeugen, wobei der Reagenzienaufnahmebereich (110) eine sich zwischen der Peelnaht (105) und dem Folienbeutelboden (125) erstreckende Reagenzienaufnahmelänge (135) aufweist und der Schlauch (115) eine sich zwischen der Peelnaht (105) und der Folienbeutelöffnung (125) erstreckende Schlauchlänge (140) aufweist, wobei die Schlauchlänge (140) zumindest fünf Prozent der Reagenzienaufnahmelänge (135) einnimmt.

2. Folienbeutel (100) gemäß Anspruch 1, **gekennzeichnet durch** mindestens eine den Folienbeutelboden (120) mit der Folienbeutelöffnung (125) verbindende fluiddichte Begrenzungslinie (130, 131).

3. Folienbeutel (100) gemäß Anspruch 2, **dadurch gekennzeichnet, dass** eine Breite der Begrenzungslinie (130, 131) im Bereich des Schlauchs (115) breiter ist, als eine Breite der Begrenzungslinie (130, 131) im Reagenzienaufnahmebereich (110).

4. Folienbeutel (100) gemäß einem der vorangegangenen Ansprüche, **dadurch gekennzeichnet, dass** der Folienbeutelboden (120) eine Länge (245) zwischen einem und vierzig Millimeter aufweist, und/oder die Reagenzienaufnahmelänge 135 zwischen fünf und einhundert Millimeter beträgt, und/oder die Schlauchlänge (140) zwischen zwei und einhundert Millimeter beträgt und/oder die Begrenzungslinie (130, 131) im Bereich des Schlauchs (115) eine Breite zwischen zweihundert Mikrometer und zwanzig Millimeter aufweist.

5. Folienbeutel (100) gemäß einem der vorangegangenen Ansprüche, **dadurch gekennzeichnet, dass** im Reagenzienaufnahmebereich (110) ein Fluid aufgenommen ist.

6. Mikrofluidisches Analysesystem (400) mit einem Behälter (405) mit zumindest einer ersten Schlauchkammer (410) und einer benachbart angeordneten zweiten Schlauchkammer (410) und zumindest einem ersten Folienbeutel (100) und einem benachbart angeordneten zweiten Folienbeutel (100) gemäß einem der vorangegangenen Ansprüche, **dadurch gekennzeichnet, dass** zumindest ein die Folienbeutelöffnung (125) umfassender Teilabschnitt des Schlauchs (115) des ersten Folienbeutels (100) von der ersten Schlauchkammer (410) aufgenommen ist, und, dass zumindest ein die Folienbeutelöffnung (125) umfassender Teilabschnitt des Schlauchs (115) des zweiten Folienbeutels (100), von der zweiten Schlauchkammer (410) aufgenommen ist, wobei der Reagenzienaufnahmebereich (110) des ersten Folienbeutels (100) und der Reagenzienaufnahmebereich (110) des zweiten Folienbeutels (100) außerhalb der Schlauchkammern (410) angeordnet ist.

7. Analysesystem (400) gemäß Anspruch 5 mit einem weiteren Folienbeutel (100) gemäß einem der vorangegangenen Ansprüche, der zwischen dem ersten und dem zweiten Folienbeutel (100) angeordnet ist, und einer weiteren Schlauchkammer (410), die zwischen der ersten und der zweiten Schlauchkammer (410) angeordnet ist, wobei zumindest ein die Folienbeutelöffnung (125) umfassender Teilabschnitt des Schlauchs (115) des weiteren Folienbeutels (100), von der weiteren Schlauchkammer (410) aufgenommen ist, wobei die Schlauchlänge des weiteren Folienbeutels (100) eine kürzere Länge aufweist, als die Schlauchlänge des ersten Folienbeutels (100) und die Schlauchlänge des zweiten Folienbeutels (100).

8. Analysesystem (400) gemäß einem der vorangegangenen Ansprüche, **gekennzeichnet durch** eine Stempeleinrichtung (600), die ausgebildet ist, um eine Kraft (415) auf zumindest einen der Reagenzienaufnahmebereiche (110) auszuüben, wobei die Kraft (415) dazu ausgebildet ist, um einen zum Lösen der Peelnaht (105) geeigneten Druck im Inneren des zumindest einen Reagenzienaufnahmebereichs (110) aufzubauen, wodurch das Fluid durch den Schlauch (115) in die Schlauchkammer (410) fließen kann.

9. Analysesystem (400) gemäß einem der vorangegangenen Ansprüche **dadurch gekennzeichnet, dass** der Behälter (405) eine Vorlagerungskammer (500) mit einem Boden (502) und einer dem Boden (502) gegenüberliegend angeordneten Stempelöffnung (810) zum Einführen eines Stempels (600) einer Stempeleinrichtung aufweist, wobei die Schlauchkammern (410) über Verbindungsöffnungen (510) in die Vorlagerungskammer (500) münden, wobei die Reagenzienaufnahmebereiche (110) schräg zu dem Boden (502) nebeneinanderstehend innerhalb der Vorlagerkammer (500) angeordnet sind.

10. Analysesystem (400) gemäß Anspruch 8, **gekennzeichnet durch** eine elastische Membran (800), die die Stempelöffnung (810) verschließt.

11. Verfahren zum Herstellen eines mikrofluidischen Analysesystems (400), wobei das Verfahren die folgenden Schritte aufweist:
Bereitstellen eines Behälters (405) mit zumindest einer ersten Schlauchkammer (410) und einer benachbart angeordneten zweiten Schlauchkammer (410);
Bereitstellen zumindest eines ersten Folienbeutels (100) und eines zweiten Folienbeutels (100) gemäß einem der vorangegangenen Ansprüche; und
Anordnen der zwei Folienbeutel (100) benachbart zueinander, wobei zumindest ein die Folienbeutelöffnung (125) umfassender Teilabschnitt des Schlauchs (115) des ersten Folienbeutels (100) von der ersten Schlauchkammer (410) aufgenommen wird, und zumindest ein die Folienbeutelöffnung (125) umfassender Teilabschnitt des Schlauchs (115) des zweiten Folienbeutels (100), von der zweiten Schlauchkammer (410) aufgenommen wird, wobei der Reagenzienaufnahmebereich (110) des ersten Folienbeutels (100) und der Reagenzienaufnahmebereich (110) des zweiten Folienbeutels (100) außerhalb der Schlauchkammern (410) angeordnet wird.

12. Verfahren zum Betreiben eines mikrofluidischen Analysesystems (400) gemäß einem der vorangegangenen Ansprüche, wobei das Verfahren den folgenden Schritt aufweist:
Ausüben einer Kraft (415) auf zumindest einen der Reagenzienaufnahmebereiche (100), um einen zum Lösen der Peelnaht (105) geeigneten Druck im Inneren des Reagenzienaufnahmebereichs (110) aufzubauen.
